(19) Europäisches Patentamt

European Patent Office

Office européen des brevets

(11) **EP 1 235 131 B1**

(12) **EUROPÄISCHE PATENTSCHRIFT**

(45) Veröffentlichungstag und Bekanntmachung des Hinweises auf die Patenterteilung:
**05.07.2006 Patentblatt 2006/27**

(51) Int Cl.:
*G05D 23/19* *(2006.01)*

(21) Anmeldenummer: **01130807.9**

(22) Anmeldetag: **24.12.2001**

(54) **Raumtemperaturregelung**

Room temperature control

Régulation de la température d'une pièce

(84) Benannte Vertragsstaaten:
**AT CH DE LI**

(30) Priorität: **23.02.2001 DE 10108852**

(43) Veröffentlichungstag der Anmeldung:
**28.08.2002 Patentblatt 2002/35**

(73) Patentinhaber: **Techem Energy Services GmbH**
**65760 Eschborn (DE)**

(72) Erfinder: **Ohl, Jochen, Dr.**
**64823 Gross-Umstadt (DE)**

(74) Vertreter: **KEIL & SCHAAFHAUSEN**
**Patentanwälte**
**Cronstettenstrasse 66**
**60322 Frankfurt am Main (DE)**

(56) Entgegenhaltungen:
**DE-A- 10 011 558        DE-A- 19 749 623**
**DE-C- 4 022 935         US-A- 4 455 095**

**Beschreibung**

Die Erfindung betrifft eine Raumtemperaturregelung mit einem ersten Temperaturfühler zur Messung der Raumlufttemperatur, einem zweiten Temperaturfühler zur Messung der Vorlauftemperatur eines Heizmittels und einem Regler zur Betätigung eines Ventils für den Heizmitteldurchfluss.

Gemäß der Heizungsanlagenverordnung sind Heizungsanlagen mit Einrichtungen zur raumweisen Temperaturregelung auszurüsten. Üblicherweise werden dazu sogenannte Thermostatventile eingesetzt. Dies sind mechanische Regler, die die Raumtemperatur messen und in Abhängigkeit von der Differenz zum Sollwert in eine Hubstellung wandeln. Diese Technik hat sich bewährt und wird häufig eingesetzt. Allerdings ist die Regelung der Raumtemperatur nicht optimal. Es treten folgende systembedingte Probleme auf:

Die Ventilkennlinie, d.h. der über dem Hub aufgetragene Massenstrom, eines optimal linearen Ventils ist eine Gerade. Beim Betrieb in einem hydraulischen Mischkreis, beispielsweise einer Heizungsanlage, verformt sich die Ventilkennlinie in Abhängigkeit der Ventilautorität aber zu einer sogenannten Betriebskennlinie. Je kleiner die Ventilautorität ist, desto steiler ist der Anstieg der Betriebskennlinie im Bereich kleiner absoluter Hübe, d.h. hier bewirken kleine Hubänderungen verhältnismäßig große Massenstromänderungen. Bei konstanten Reglerparameter kann somit keine gleichbleibende Regelgüte über den gesamten Hubbereich des Ventils erzielt werden. Bei einer Auslegung der Reglerparameter für große Ventilautoritäten und Betrieb des Reglers an einem Ventil mit kleiner Ventilautorität wird das System im Bereich kleiner Hubstellungen zu Schwingungen neigen. Umgekehrt wird das Regelverhalten bei einer Auslegung der Reglerparameter für kleine Ventilautoritäten und Betrieb an einem Ventil mit großer Ventilautorität bzw. im Bereich großer Hubstellungen sehr träge werden.

Ferner erfasst der Raumtemperaturregler durch den Heizmitteltemperatureinfluss eine höhere Temperatur als die tatsächliche, in der Raummitte vorherrschende Temperatur. Die Bestimmung des Heizmitteltemperatureinflusses erfolgt nach DIN EN 215 und beträgt bei heutigen Reglern ca. 0,5K / 30 K, d.h. bei einer Änderung der Vorlauftemperatur um 30 K ändert sich bei gleicher Raumtemperatur die vom Regler erfasste Temperatur um 0,5 K. Außerdem strahlt ein Heizkörper Wärme in den Raum ab. Diese Strahlung trifft aber auch den Regler, so dass dieser eine erhöhte Temperatur misst. Dieser Messfehler hängt im Wesentlichen von der betriebsabhängigen Temperatur des Vorlaufs und der konkreten räumlichen Anordnung ab. Durch die Betriebsabhängigkeit ist der Messfehler nicht konstant und wird je nach aktuellem Zustand zu mehr oder weniger schwankenden Raumtemperaturen führen.

Aus der DE 197 49 623 A ist ein Verfahren gemäß dem Oberbegriff des Anspruchs 1 bekannt.

Aus der DE 32 13 845 A1 ist ein Verfahren zur Bestimmung der Wärmeabgabe von Heizkörpern oder Fußbodenheizungen und zur Regelung der Wärmeabgabe mit Vorlauf-, Rücklauf- und Raumlufttemperaturmessfühlern bekannt, wobei in die Regelung nur die gemessene Raumlufttemperatur eingeht.

In der EP 0 065 201 B1 ist ebenfalls ein Verfahren zur Messung der Wärmeenergieabgabe von Raumheizungen mit drei Fühlern beschrieben. Hierbei wird die vom Heizkörper abgegebene Wärmeleistung aus voreingestellten Heizungskonstanten sowie den im Betrieb abgetasteten Temperaturmesswerten ermittelt, wobei der sich ändernde Heizmitteldurchsatz mit Hilfe empirischer Beziehungen berücksichtigt wird. Eine Raumtemperaturregelung auf Basis der ermittelten Messwerte wird nicht beschrieben.

Ein in der DE 32 43 198 A1 beschriebenes Verfahren zur Ermittlung des relativen Wärmeverbrauchs verwendet zusätzlich zu der erfassten Vor- und Rücklauftemperatur die Hubstellung des Ventils als Maß für die Durchflussmenge des Heizmittels. Die Verwendung der Hubstellung als Maß für den Durchfluss hat jedoch den Nachteil, dass die Ventilautorität nicht berücksichtigt wird, welche den Zusammenhang zwischen Hubstellung und Durchfluss maßgeblich beeinflusst. Hier wird von einer vorschriftsmäßigen Auslegung der Heizungsanlage ausgegangen, was in der Praxis jedoch häufig nicht gegeben ist. Ebenso erfolgt keine Verwendung der zusätzlichen Signale zum Zweck der Regelung.

In der DE 297 10 248 U1 wird eine Vorrichtung zur Wärmeverbrauchserfassung beschrieben, die neben Vorlauf-, Rücklauf- und Raumlufttemperatursensor noch einen die Druckdifferenz um das Ventil messenden Druckdifferenzsensor enthalten kann, der jedoch zu einer weiteren Verteuerung des Gerätes führt. Zur Regelung der Heizleistung ist ein zusätzlicher Raumlufttemperatursensor vorgesehen.

Schließlich ist in der DE 200 09 158 der Anmelderin eine Anordnung beschrieben, in der die Raumlufttemperatur in der Nähe des Rücklaufs gemessen wird, wodurch sich zumindest der Messfehler auf Grund der Wärmestrahlung reduziert. Hierbei wird jedoch die Hubstellung des Ventils nicht berücksichtigt.

Aufgabe der vorliegenden Erfindung ist es, eine Raumtemperaturregelung vorzuschlagen, bei der die Regelgüte auf einfache und kostengünstige Weise weiter verbessert wird.

Diese Aufgabe wird bei einer Raumtemperaturregelung der eingangs genannten Art erfindungsgemäß durch einen dritten Temperaturfühler zur Messung der Rücklauftemperatur des Heizmittels gelöst, wobei aus den Messwerten der Temperaturmessfühler für die Raumluft-, die Vorlauf- und die Rücklauftemperatur die Betriebskennlinie des Ventils ermittelt wird und wobei die Regelparameter der Raumtemperaturregelung in Abhängigkeit von dem Arbeitspunkt des Ventils an die Betriebskennlinie angepasst werden. Aus der Betriebskennlinie des Ventils kann der Heizmitteldurchfluss für eine bestimmte Hubstellung genau abgelesen werden. Daher ist es für die Regelung bei Kenntnis der Betriebskennlinie möglich, die Regelparameter für die notwendige Hubänderung arbeitspunktabhängig genau an die gewünschte Änderung im Heizmitteldurchfluss anzupassen und damit ein Übersteuern der Regelung zu vermeiden. Dadurch wird die tatsächliche Raumtemperatur sehr direkt an die Sollraumtemperatur angepasst und die Regelgüte deutlich erhöht.

Die Betriebskennlinie wird dabei erfindungsgemäß durch Bestimmung des Massenstroms durch das Ventil bei jeweils zugehöriger Hubstellung des Ventils ermittelt, indem der Massenstrom aus dem Quotienten der aktuellen Wärmeleistung und der Normwärmeleistung eines Heizkörpers oder einer Fußbodenheizung bestimmt wird. Die aktuelle Wärmeleistung kann dabei einfach aus einer mittleren Temperaturdifferenz zwischen Vorlauf-, Rücklauf- und Raumlufttemperatur bestimmt werden, wobei sowohl eine arithmetische gemittelte Temperaturdifferenz als auch eine logarithmisch gemittelte Temperaturdifferenz verwendet werden kann. Bei Verwendung einer arithmetisch gemittelten Temperaturdifferenz sollte für große Temperaturspreizungen zwischen der Vorlauf- und der Rücklauftemperatur ein weiterer Korrekturfaktor angebracht werden. Die Normwärmeleistung ergibt sich aus Normwerten der Heizungsanlage, die bei Inbetriebnahme der Regelung vorgegeben werden.

Vorzugsweise wird die Betriebskennlinie in regelmäßigen Zeitabständen neu ermittelt, um Veränderungen im hydraulischen Heizungssystem oder eine Alterung des Ventils zu berücksichtigen. Als sinnvoll hat sich im Regelfall eine Ermittlung der Betriebskennlinie nach Erreichen eines stationären Zustandes erwiesen. Je nach Anforderungen an die Regelgüte oder nach Qualität der Heizungsanlage kann die Ermittlung der Betriebskennlinie aber auch in größeren oder kleineren Zeitabständen erfolgen.

Um die Betriebskennlinie in einem etwa stationären Zustand zu bestimmen, wird der Massenstrom für eine Hubstellung erst nach einer bestimmten Relaxationszeit, bspw. 15 Minuten, nach Änderung des Hubs bestimmt. Nach dieser Zeit haben sich kurzfristige dynamische Schwankungen nach einer Änderung im Heizmitteldurchfluss wieder ausgeglichen, so dass verlässliche Messwerte aufgenommen werden können.

Zum Ausgleich kurzzeitiger Temperaturschwankungen, von elektronischem Rauschen oder dgl. können die Messsignale der Temperaturmessfühler erfindungsgemäß mit einem elektronischen Filter geglättet werden. Durch den Einbau derartiger Filter wird die Regelgüte der Raumtemperaturregelung noch weiter erhöht. Dazu kann vorzugsweise ein Tiefpassfilter verwendet werden.

Es ist erfindungsgemäß vorgesehen, dass der/die Regelparameter zur Ermittlung des Hubsollwertes für das Ventil von der Steigung der Betriebskennlinie an der aktuellen Hubstellung des Ventils abhängt. Die Steigung der Betriebskennlinie ist ein Maß dafür, wie schnell sich der tatsächliche Massenstrom durch das Ventil bei einer Hubänderung ändert, so dass mit der Steigung die Wirkung der Hubänderung gut abgeschätzt werden kann.

Vorzugsweise wird vor Ausführung des Stellbefehls auch die Steigung der Betriebskennlinie an der Soll-Hubstellung bestimmt und der Stellbefehl nur dann ausgeführt, wenn die Steigung der Betriebskennlinie innerhalb eines bestimmten Wertebereichs liegt. Damit können insbesondere bei batteriebetriebenen Raumtemperaturreglern lange Hubstrecken im Bereich einer nur flacher Steigung der Betriebskennlinie vermieden werden, in denen die Auswirkungen auch einer großen Hubänderung auf die Raumtemperatur nur klein sind.

Nachfolgend wird eine bevorzugte Ausführungsform der vorliegenden Erfindung anhand der Zeichnung näher beschrieben.

Es zeigen:

Fig. 1    den Verlauf von Betriebskennlinien für verschiedene Ventilautoritäten in einem Diagramm;

Fig. 2    schematisch den Aufbau der erfindungsgemäßen Raumtemperaturregelung in Draufsicht.

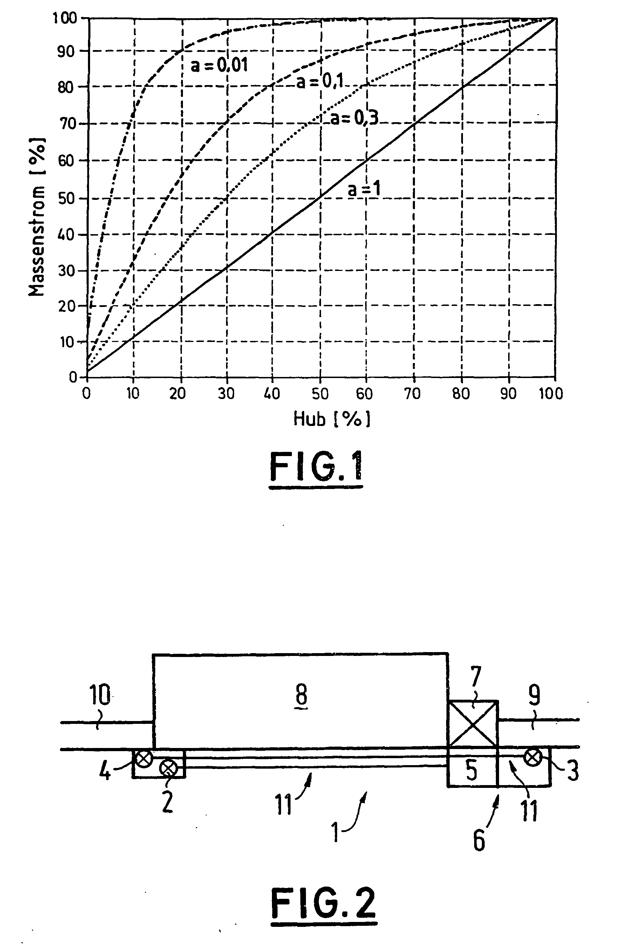

Bei dem in Fig. 1 dargestellten Diagramm ist der Hub eines beliebigen Ventils gegen den Massenstrom, der durch dieses Ventil in Abhängigkeit der Hubstellung fließt, jeweils in Prozent dargestellt. Bei einem ideal linearen Ventil ist die Abhängigkeit des Massenstroms von dem Hub eine Gerade mit der Steigung eins (Kurve a = 1). In diesem Fall ist auch die Ventilautorität a, die das Verhältnis von Druckverlust bei offenem Ventil zu Druckverlust bei geschlossenem Ventil bezeichnet, gleich eins. Bei realen Ventilen beträgt die Ventilautorität ungefähr a ≈ 0,3, worauf die Heizungsanlagen in der Regel ausgelegt werden. Die dazugehörige Betriebskennlinie (Kurve a = 0,3) zeigt im Vergleich zu der Kurve mit a = 1 eine steilere Steigung bei kleineren und eine flachere Steigung bei größeren Hüben. Bei weiter abnehmenden Ventilautoritäten (vgl. Kurve a = 0,1 und a = 0,01) wird die Betriebskennlinie des Ventils bei kleinem Hub zunehmend steiler und flacht bei größeren Hüben entsprechend stärker ab.

Die tatsächliche Ventilautorität hängt neben der Bauart des Ventils auch stark von dem Strömungsverhalten in der Heizungsanlage ab. Daher führt es in der Regel zu nur unbefriedigenden Ergebnissen, wenn die Regelung von einer mittleren Ventilautorität a = 0,3 ausgeht. Insbesondere bei kleineren Ventilautoritäten ändert sich dann der tatsächliche Massenstrom bei einer Hubänderung wesentlich stärker, als dies von der Regelung erwartet wird. Die daraus resultierenden Übersteuerungen müssen wieder ausgeglichen werden, was zu Schwingungen der Raumtemperatur um den gewünschten Sollwert führt.

Um dies zu vermeiden, weist die Raumtemperaturregelung 1 einen ersten Temperaturfühler 2 zur Messung der Raumlufttemperatur, einen zweiten Temperaturfühler 3 zur Messung der Vorlauftemperatur eines Heizmittels und einen dritten Temperaturfühler 4 zur Messung der Rücklauftemperatur des Heizmittels auf. Die drei Temperaturfühler 2, 3, 4 sind mit einer Steuerung 5 eines Heizkörperreglers 6 verbunden, die zur Einstellung des Ventilhubs an dem Ventil 7 am Eingang eines Heizkörpers 8 angeordnet ist.

Der Temperaturfühler 3 zur Messung der Vorlauftemperatur ist an der Zulaufleitung 9 für das Heizmittel angebracht und mit in den Heizkörperregler 6 integriert. Der Temperaturfühler 4 zur Messung der Rücklauftemperatur ist entsprechend an der Ablaufleitung 10 für das Heizmittel angeordnet und gemeinsam mit dem Temperaturfühler 2 zur Messung der Raumlufttemperatur in einem separaten Gehäuse untergebracht. Natürlich können die Temperaturfühler 2, 3, 4 auch anders gruppiert oder angeordnet sein. Ebenso denkbar ist die Anordnung eines Anlegefühlers.

Die Messwerte der Temperaturfühler 2, 3, 4 werden je nach Einbausituation über Kabel 11 an die Steuerung 5 des Heizkörperreglers 6 weitergeleitet, in der sie von einem nicht dargestellten Rechenwerk, bspw. einem Mikroprozessor, weiterverarbeitet werden. Zum einen wird die Raumtemperatur ermittelt, um die Abweichung der tatsächlichen Raumtemperatur von der Soll-Raumtemperatur zu bestimmen. Ferner wird die Betriebskennlinie des Ventils 7 auf Basis der Messwerte der Temperatursensoren 2, 3, 4 bestimmt.

Dazu wird die von dem Heizkörper 8 abgegebene Leistung mit Hilfe der aus der DIN 4703 bekannten Gleichung zur Umrechnung der Heizkörperleistung aus verschiedenen Temperaturdifferenzen ermittelt:

$$\frac{\dot{Q}}{\dot{Q}_N} = \left(\frac{\Delta t}{\Delta t_N}\right)^n, \qquad\qquad \text{(Gleichung 1)}$$

wobei $\dot{Q}$ die aktuelle Wärmeleistung des Heizkörpers 8, $\dot{Q}_N$ die Normwärmeleistung des Heizkörpers 8, $\Delta t$ die mittlere Temperaturdifferenz zwischen Heizmittel- und Raumlufttemperatur, $\Delta t_N$ die Normtemperaturdifferenz zwischen Heizmittel- und Raumlufttemperatur und n der Heizkörperexponent ist.

Die mittlere Temperaturdifferenz kann dabei als arithmetisch gemittelte Temperaturdifferenz

$$\Delta t = \frac{t_V + t_R}{2} - t_L$$

oder als logarithmisch gemittelte Temperaturdifferenz

$$\Delta t_{\ln} = \frac{t_V - t_R}{\ln\left(\dfrac{t_V - t_L}{t_R - t_L}\right)}$$

berechnet werden, wobei $t_V$ die Vorlauftemperatur, $t_R$ die Rücklauftemperatur und $t_L$ Raumlufttemperatur ist. Bei Verwendung der arithmetisch gemittelten Temperaturdifferenz ist für eine große Temperaturspreizung $t_V$ - $t_R$ noch ein Korrekturfaktor zu berücksichtigen.

Die Wärmeleistung des Heizkörpers 8 ergibt sich aus dem Zusammenhang:

$$\dot{Q} = c_W \cdot \dot{m} \cdot (t_V - t_R) \qquad\qquad \text{(Gleichung 2)}$$

wobei $c_W$ die spezifische Wärmekapazität des Heizmittels (Wärmeträgermedium) und $\dot{m}$ der Massenstrom ist.

Durch Einsetzen von (Gleichung 2) in (Gleichung 1) ergibt sich der Massenstrom zu

$$\dot{m} = \frac{\dot{Q}_N}{c_W \Delta t_N^n} \Delta t^{n-1}. \qquad\qquad \text{(Gleichung 3)}$$

Die Normwärmeleistung des jeweiligen Heizkörpers 8 und die dazugehörende Normtemperaturdifferenz sowie der Heizkörperexponent müssen in diesem Fall vorab bekannt sein und werden dem Heizkörperregler 6 bei der Inbetriebnahme übermittelt. Als Heizmittel wird in der Regel Wasser verwendet, dessen spezifische Wärmekapazität bekannt ist.

Wenn die Normwärmeleistung nicht bekannt ist, kann anstelle des Massenstroms $\dot{m}$ der relative Massenstrom $\dot{m}_R$, d. h. der Massenstrom bezogen auf den Normmassenstrom, aus der Normwärmeleistung

$$\dot{Q}_N = c_W \cdot \dot{m}_N \cdot \left(t_{VN} - t_{RN}\right) \qquad\qquad \text{(Gleichung 4)}$$

durch Einsetzen in (Gleichung 2) ermittelt werden:

$$\frac{\dot{m}}{\dot{m}_N} = \dot{m}_R = \frac{\left(t_{VN} - t_{RN}\right)}{c_W \Delta t_N^n} \Delta t^{n-1}, \qquad\qquad \text{(Gleichung 5)}$$

wobei der Index $_N$ jeweils auf die Normgröße hinweist. Liegen keine genaueren Informationen über die Normgrößen vor, können die Normvorlauftemperatur als $t_{VN} = 90°C$, die Normrücklauftemperatur als $t_{RN} = 70°C$ und die Normraumlufttemperatur als $t_{LN} = 20°C$, der Heizkörperexponent als $n = 1{,}3$ und als Heizmittel Wasser angenommen werden. Damit ist der Vorfaktor aus (Gleichung 5) konstant.

Mit der Kenntnis des Massenstromes $\dot{m}$ bzw. $\dot{m}_R$ und der Hubstellung h lässt sich die Betriebskennlinie $\dot{m} = f$ (h) bzw. $\dot{m}_R = f(h)$ des Ventils 7 ermitteln. Diese wird je nach Ventilautorität mehr oder weniger steil verlaufen. Da die Ventilautorität auch vom aktuellen Zustand der kompletten Hydraulik abhängt, wird über einen Algorithmus die bevorzugte Betriebskennlinie des jeweiligen Ventils 7 ermittelt. Zur Vereinfachung wird die Betriebskennlinie durch Berechnung des Massenstroms an verschiedenen Stützpunkten der Kurve mit einer vorgegebenen Verteilung ermittelt und dann in eine kontinuierliche Kurve umgerechnet.

Mit der Kenntnis dieser Betriebskennlinie lassen sich die Reglerparameter auf die Betriebskennlinie des Ventils 7 adaptieren, so dass eine Verbesserung der Regelgüte erzielt wird. Dann wird der Heizkörperregler 6 unabhängig von der hydraulischen Situation der Heizungsanlage ein vorhersehbares Verhalten zeigen.

Die zuvor beschriebene Ermittlung der Betriebskennlinie und die Anpassung der Reglerparameter wird in regelmäßigen Abständen, bspw. im stationären Zustand, wiederholt, um Änderungen im hydraulischen Verhalten der Heizungsanlagen oder an den Ventilen 7 berücksichtigen zu können. Hierbei kann zum Ausgleich starker Schwankungen die zuvor gültige Betriebskennlinie berücksichtigt werden, bspw. indem an einem neu gemessenen Punkt der Stützpunkt für die neue Betriebskennlinie wie folgt ermittelt wird:

*X (Stützwert der alten Betriebkennlinie) + (1-X) (neu gemessener Wert)*

*= Stützpunktwert der neuen Betriebkennlinie*

wobei der Gewichtungsfaktor X bspw. 0,8 beträgt.

Zur ausreichenden Filterung und Glättung der von den Temperaturfühlern 2, 3, 4 gemessenen Temperaturen ist eine nicht dargestellte Signalvorverarbeitung in die Steuerung 5 des Heizkörperreglers 6 integriert, die im wesentlichen aus einem elektronischen Tiefpassfilter oder dgl. besteht.

Bei der Anpassung der Reglerparameter ist insbesondere vorgesehen, dass der Reglerparameter zur Ermittlung des Hubsollwertes für das Ventil 7 von der Steigung der Betriebskennlinie an der aktuellen Hubstellung des Ventils 7 abhängt, die ein Maß für die Änderung des Massenstroms bei einer vorgegeben Hubänderung ist. Damit ist es u.a. möglich, die Reaktionszeit der Raumtemperaturregelung 1 zu optimieren, da die Wirkung der vorgegebenen Hubänderung genau abgeschätzt werden kann. Ein weiterer Optimierungsschwerpunkt kann die Minimierung der Hubbewegung bei vorgegebener Mindest-Regelgüte sein. Da im Bereich einer flachen Steigung der Betriebskennlinie die Auswirkungen einer vergleichsweise großen Hubänderung auf den Massenstrom nur gering ist, ist auch die Auswirkung auf die Raumtemperatur vergleichsweise klein. Somit wird auch die Regelgüte nur noch unwesentlich verbessert. Daher ist es sinnvoll, die Steigung der Betriebskennlinie an der Soll-Hubstellung vor Ausführung eines Stellbefehls zu bestimmen und den Stellbefehl nur auszuführen, wenn die Steigung der Betriebskennlinie in einem bestimmten Wertebereich liegt. Dies ist zur Einsparung von Batterieleistung besonders für batteriebetriebene Heizkörperregler von Interesse.

In einer anderen Ausführung wird die Raumtemperaturregelung 1 auch für Fußbodenheizungen eingesetzt. In diesem Fall sind die Normwärmeleistung und eine dem Heizkörperexponent n entsprechende Größe bspw. der DIN-Vorschrift für Flächenheizungen oder den Herstellerangaben zu entnehmen.

Durch die Anpassung der Regelparameter an die Betriebskennlinie des Heizkörperventils kann die Regelgüte von Raumtemperaturregelungen 1 auf einfache und kostengünstige Weise erhöht werden, da das Reglerverhalten unabhängig von der hydraulischen Situation der Heizungsanlage vorhersagbar ist. Hierauf aufbauend ist es möglich, die Reaktionszeit des Reglers zu optimieren. Andererseits können bei einer vorgegebenen Regelgüte die Hubbewegungen minimiert und dadurch der Stromverbrauch reduziert werden. Die Betriebskennlinie kann einfach und kostengünstig durch eine Drei-Fühler-Temperaturmessung ermittelt werden.

**Bezugszeichenliste**

| | |
|---|---|
| 1 | Raumtemperaturregelung |
| 2 | Temperaturfühler zur Messung der Raumlufttemperatur |
| 3 | Temperaturfühler zur Messung der Vorlauftemperatur |
| 4 | Temperaturfühler zur Messung der Rücklauftemperatur |
| 5 | Steuerung |
| 6 | Heizkörperregler |
| 7 | Ventil |
| 8 | Heizkörper |
| 9 | Zulaufleitung |
| 10 | Ablaufleitung |
| 11 | Kabel |

**Patentansprüche**

1. Verfahren zur Raumtemperaturregelung mit einem ersten Temperaturfühler (2) zur Messung der Raumtemperatur, einem zweiten Temperaturfühler (3) zur Messung der Vorlauftemperatur eines Heizmittels, einem dritten Temperaturfühler (4) zur Messung der Rücklauftemperatur des Heizmittels und einem Regler (6) zur Betätigung eines Ventils (7) für den Heizmitteldurchfluss **dadurch gekennzeichnet, daß** aus den Messwerten der Temperaturfühler (2, 3, 4) für die Raumluft-, die Vorlauf- und die Rücklauftemperatur die Betriebskennlinie des Ventils (7) ermittelt wird und wobei die Regelparameter der Raumtemperaturregelung (1) in Abhängigkeit von dem Arbeitspunkt des Ventils (7) an die Betriebskennlinie angepasst werden.

2. Verfahren zur Raumtemperaturregelung nach Anspruch 1, **dadurch gekennzeichnet, dass** die Betriebskennlinie durch Bestimmung des Massenstroms durch das Ventil (7) bei jeweils zugehöriger Hubstellung des Ventils (7) ermittelt wird, indem der Massenstrom aus dem Quotienten der Normwärmeleistung und der aktuellen Wärmeleistung eines Heizkörpers (8) oder einer Fußbodenheizung bestimmt wird.

3. Verfahren zur Raumtemperaturregelung nach einem der vorhergehenden Ansprüche, **dadurch gekennzeichnet, dass** die Betriebskennlinie jeweils in regelmäßigen Zeitabständen, bspw. einmal jährlich, ermittelt wird.

4. Verfahren zur Raumtemperaturregelung nach einem der vorhergehenden Ansprüche, **dadurch gekennzeichnet, dass** der Massenstrom zur Ermittlung der Betriebskennlinie für eine Hubstellung erst nach einer bestimmten Relaxationszeit, bspw. 15 Minuten, nach Änderung des Hubs bestimmt wird.

5. Verfahren zur rregelung nach einem der vorhergehenden Ansprüche, **dadurch gekennzeichnet, dass** die Messsignale der Temperaturfühler (2, 3, 4) mit einem elektronischen Filter geglättet werden.

**6.** Verfahren zur Raumtemperaturregelung nach Anspruch 5, **dadurch gekennzeichnet, dass** der Filter ein Tiefpassfilter ist.

**7.** Verfahren zur Raumtemperaturregelung nach einem der vorhergehenden Ansprüche, **dadurch gekennzeichnet, dass** ein Regelparameter zur Ermittlung des Hubsollwertes für das Ventil (7) von der Steigung der Betriebskennlinie an der aktuellen Hubstellung des Ventils (7) abhängt.

**8.** Verfahren zur Raumtemperaturregelung nach einem der vorhergehenden Ansprüche, **dadurch gekennzeichnet, dass** die Steigung der Betriebskennlinie an der Soll-Hubstellung vor Ausführung eines Stellbefehls bestimmt wird und der Stellbefehl nur ausgeführt wird, wenn die Steigung der Betriebskennlinie innerhalb eines bestimmten Wertebereichs liegt.

**Claims**

**1.** A process of controlling the room temperature, comprising a first temperature sensor (2) for metering the room temperature, a second temperature sensor for metering the lead temperature of a heating medium, a third temperature sensor (4) for metering the return temperature of the heating medium, and a control unit (6) for actuating a valve (7) for the flow of the heating medium, **characterized in that** the operating characteristic of the valve (7) is determined from the measured values of temperature sensors (2, 3, 4) for the room, lead and return temperatures, with the control parameters of the room temperature control (1) being adjusted to the operating characteristic in response to the point of operation of the valve (7).

**2.** A process of controlling the room temperature according to claim 1, **characterized in that** the operating characteristic is obtained by determining the flow of medium through the valve (7) in the respectively appertaining stroke position of the valve (7) by determining the flow of medium from the quotient of the standard heat output and the actual heat output of a heating unit (8) or a floor heating system.

**3.** A process of controlling the room temperature according to any one of the preceding claims, **characterized in that** the operating characteristic in each case is determined at regular intervals, for example, once a year.

**4.** A process of controlling the room temperature according to any one of the preceding claims, **characterized in that** the flow of medium for determining the operating characteristic for a stroke position will be determined only after a predetermined relaxation time, for example, 15 minutes after the stroke having changed.

**5.** A process of controlling the room temperature according to any one of the preceding claims, **characterized in that** the measuring signals of the temperature sensors (2, 3, 4) are filtered by an electronic filter.

**6.** A process of controlling the room temperature according to any one of the preceding claims, **characterized in that** the filter is a deep-pass filter.

**7.** A process of controlling the room temperature according to any one of the preceding claims, **characterized in that** one control parameter for determining the nominal stroke value for the valve (7) is dependent on the inclination of the operating characteristic in the actual stroke position of the valve (7).

**8.** A process of controlling the room temperature according to any one of the preceding claims, **characterized in that** the inclination of the operating characteristic in the nominal stroke position will be determined prior to performing a control command and that the control command will be performed only if the inclination of the operating characteristic is within a predetermined range of values.

**Revendications**

**1.** Procédé à régler la température ambiante, comportant un palpeur de température (2) premier pour mesurer la température ambiante, un palpeur de température (3) secondaire pour mesurer la température d'aller d'un milieu à brûler, un palpeur de température (4) troisième pour mesurer la température à retour du milieu à brûler, et un mécanisme de réglage (6) pour commander une soupape (7) pour le passage du milieu à brûler, **caractérisé en ce que** la courbe caractéristique d'opération de la soupape (7) sera calculer des valeurs mesurées des palpeurs de température (2, 3, 4) pour la température ambiante, la température d'aller et la température de retour, les paramètres de réglage de la température ambiante (1) étant ajustés à la courbe caractéristique d'opération en fonction du point de travail de la soupape (7).

2. Procédé à régler la température ambiante selon la revendication 1, **caractérisé en ce que** la courbe caractéristique d'opération sera calculée par déterminer le courant de milieu à travers de la soupape (7) dans la position de levée de la soupape (7) correspondante en calculant le courant de milieu du quotient de la puissance calorifique normale et de la puissance calorifique actuelle d'un corps de chauffage (8) ou d'un chauffage du sol.

3. Procédé à régler la température ambiante selon l'une des revendications précédentes, **caractérisé en ce que** la courbe caractéristique d'opération sera déterminée en intervalles de temps réguliers, par exemple, tous les ans.

4. Procédé à régler la température ambiante selon l'une des revendications précédentes, **caractérisé en ce que** le courant de milieu pour déterminer la courbe caractéristique d'opération pour une position de levée ne sera déterminée qu'après un certain temps de relâchement, par exemple, 15 minutes, après changer la levée.

5. Procédé à régler la température ambiante selon l'une des revendications précédentes, **caractérisé en ce que** les signaux de mesure des palpeurs de température (2, 3, 4) seront filtré par l'intermédiaire d'un filtre électronique.

6. Procédé selon la revendication 5, **caractérise en ce que** le filtre est un filtre basse-bas.

7. Procédé à régler la température ambiante selon l'une des revendications précédentes, **caractérisé en ce qu'**un paramètre à réglage pour déterminer la valeur de levée prescrite pour la soupape (7) est en fonction de l'inclinaison de la courbe caractéristique dans la position actuelle de la soupape (7).

8. Procédé à régler la température ambiante selon l'une des revendications précédentes, **caractérisé en ce que** l'inclinaison de la courbe caractéristique dans la position de levée prescrite sera déterminé avant l'exécution d'une commande de réglage, et que l'ordre de réglage ne sera exécuté que l'inclinaison de la courbe caractéristique soit dedans une certaine portée de valeurs.

## FIG.1

## FIG.2